# EUROPÄISCHE PATENTSCHRIFT

(11) **EP 2 164 730 B1**
(45) Veröffentlichungstag und Bekanntmachung des Hinweises auf die Patenterteilung: **15.02.2012**
(21) Anmeldenummer: 08774595.6
(22) Anmeldetag: 01.07.2008
(51) Int. Cl.: B60T 8/36

(54) **HYDROAGGREGAT ZUR REGELUNG DES BREMSDRUCKS IN EINER FAHRZEUGBREMSANLAGE**
HYDRAULIC UNIT FOR REGULATING THE BRAKE PRESSURE IN A VEHICLE BRAKE SYSTEM
UNITÉ HYDRAULIQUE POUR RÉGULER LA PRESSION DE FREINAGE D'UNE INSTALLATION DE FREIN D'UN VÉHICULE

(30) Priorität: 05.07.2007 DE 102007031308
(43) Veröffentlichungstag der Anmeldung: 24.03.2010
(73) Patentinhaber: Robert Bosch GmbH, 70442 Stuttgart (DE)
(72) Erfinder: TANDLER, Juergen, 87629 Fuessen (DE); WEH, Andreas, 87477 Sulzberg (DE)
(86) Internationale Anmeldenummer: PCT/EP2008/058449
(87) Internationale Veröffentlichungsnummer: WO 2009/004006

(56) Entgegenhaltungen:
- WO-A-03/064229
- DE-A1- 10 237 163
- DE-A1- 19 959 670

## Beschreibung

### Stand der Technik

Die Erfindung geht aus von einem Hydroaggregat zur Regelung des Bremsdrucks in einer Fahrzeugbremsanlage entsprechend den gattungsbildenden Merkmalen des Anspruchs 1.

Ein derartiges Hydroaggregat ist beispielsweise bekannt aus der DE 199 59 670 A1. Neben den anderen gattungsbildenden Merkmalen des Anspruchs 1 weist dieses Hydroaggregat insbesondere eine Druckmittelverbindung mit einer Bohrung auf, die durch eine Ventilaufnahme eines ersten Magnetventils hindurchgeführt ist, eine Verbindung mit einem der Anschlüsse für einen Hauptbremszylinder bewirkt und in einer zweiten Ventilaufnahme für ein zweites Magnetventil endet.

Ferner sind Hydroaggregate zur Regelung eines Bremsdrucks in einer Fahrzeugbremsanlage bekannt aus der WO 03/064229 A und der DE 102 37 163 A1. Die Ausbildung und Anordnung von Aufnahmen für Magnetventile, Pumpen, Speicher, Anschlüsse und Pumpenantrieb sowie von Druckmittelverbindungen zwischen diesen Aufnahmen bestimmt wesentlich den Bearbeitungsaufwand zur Herstellung eines Gehäuseblocks eines solchen Hydroaggregats, dessen Außenabmessungen und sein Gewicht.

Kraftfahrzeuge aktueller Bauart sind aus Gründen der Fahrsicherheit in der Regel mit einem Fahrzeugbremssystem mit Antiblockierschutz-, Antriebsschlupf- und/oder Fahrstabilitätsregelung ausgestattet. Kernelement derartiger Fahrzeugbremssysteme bildet ein im Fahrzeug angeordnetes Hydroaggregat. Dieses ist in der Lage bedarfsweise den Bremsdruck an einem oder mehreren Rädern des Fahrzeugs mit Hilfe eines elektronischen Steuergeräts automatisch zu regeln um dadurch das Fahrzeug zu stabilisieren. Das Steuergerät wertet dazu Signale fahrzeugseitiger Sensoren aus und steuert am Hydroaggregat angeordnete Hydraulikkomponenten entsprechend elektronisch an.

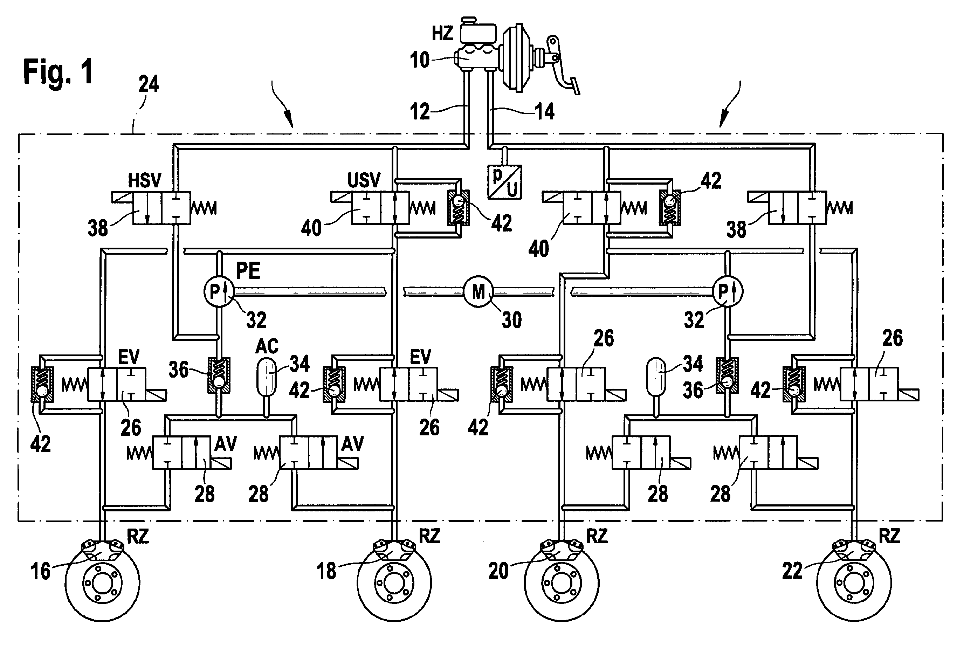

Aus dem Stand der Technik ist eine Fahrzeugbremsanlage mit Fahrstabilitätsregelung hinlänglich bekannt. Es wird auf die Broschüre der Robert Bosch GmbH mit dem Titel "Fahrstabilisierungssysteme" Seite 90, Bild 3 verwiesen, die im Rahmen der in "Gelben Reihe, Ausgabe 2004", unter der ISBN-Nr. 3-7782-2026-8 erschienen ist. Zum Verständnis der Erfindung ist der dort offenbarte Schaltplan als Figur 1 beigefügt und wird nachfolgend in Kürze erläutert:

Die bekannte Fahrzeugbremsanlage umfasst einen vom Fahrer betätigbaren Hauptbremszylinder 10 zur Erzeugung eines Bremsdrucks per Muskelkraft. An den Hauptbremszylinder 10 sind zwei voneinander getrennte Bremskreise 12, 14 mit jeweils zwei Radbremsen 16,18 ; 20,22 angeschlossen. Zur radindividuellen Regelung des Bremsdrucks ist ein Hydroaggregat 24 vorhanden. Dieses ist zwischen den Hauptbremszylinder 10 und die Radbremsen 16-22 geschaltet und weist verschiedene hydraulische Komponenten auf. Jeder Radbremse ist jeweils ein Einlassventil 26 vor- und ein Auslassventil 28.nachgeschaltet. Die Einlassventile 26 steuern einen Bremsdruckaufbau, die Auslassventile 28 einen Bremsdruckabbau an den zugeordneten Radbremsen 16-22. Eine von einem Elektromotor 30 antreibbare Pumpe 32 pro Bremskreis ist in der Lage Bremsfluid zum Bremsdruckabbau über eines der Auslassventile 28 aus der zugeordneten Radbremse 16-22 abzusaugen und in den Bremskreis 12, 14 zu fördern. Um einen schnellen Bremsdruckabbau vornehmen zu können ist ein Niederdruckspeicher 34 zwischen die Auslassventile 28 und die Pumpe 32 eines Bremskreises 12, 14 geschaltet. Zwischen der Pumpe 32 und dem Niederdruckspeicher 34 befindet sich ein in Richtung von der Pumpe 32 zu einer der Radbremsen 16-22 schließendes Rückschlagventil 36. Dieses verhindert, dass sich der Unterdruck auf der Saugseite der Pumpe 32 bis in eine der Radbremsen 16-22 hinein fortpflanzen kann.

Jeder Bremskreis 12,14 weist darüber hinaus noch ein Hochdruckschaltventil 38 und ein Umschaltventil 40 auf. Das Hochdruckschaltventil 38 ermöglicht es, dass die Pumpe 32 bei Bedarf notwendiges, zusätzliches Bremsfluid direkt aus dem Hauptbremszylinder 10 ansaugen kann. Das Umschaltventil 40 kann im Falle seiner Betätigung eine Druckmittelverbindung von den Radbremsen 16,18; 20,22 eines Bremskreises 12,14 zum 10 Hauptbremszylinder sperren. Dies ist notwendig falls Bremsdruck an einer der Radbremsen 16-22 unabhängig vom Fahrerwunsch automatisch aufgebaut werden soll. Dieser Fall tritt während eines Antriebsschlupfregelbetriebs und/oder während Fahrstabilitätsregelbetriebs auf.

Darüber hinaus sind Rückschlagventile 42 zur Steuerung von Bypasskanälen zu den Einlassventilen 26 und den Umschaltventilen 40 vorgesehen. Damit wird ein Abbau von Bremsdruck selbst bei geschlossenen Einlassventilen 26 ermöglicht bzw. ein Aufbau von Bremsdruck bei geschlossenen Umschaltventilen 40, also während einer stattfindenden Antriebsschlupfregelung oder Fahrstabilitätsregelung. Am Hydroaggregat 24 sind ferner Leitungsverbindungen ausgebildet, um die erläuterten Komponenten 26-42 hydraulisch miteinander zu kontaktieren. Diese Leitungsverbindungen sind in der schematischen Darstellung anhand von geraden Verbindungslinien veranschaulicht.

Die nachfolgend zu erläuternde Erfindung beruht darauf, diesen bekannten hydraulischen Schaltplan besonders bauraumsparend und fertigungstechnisch einfach herstellbar an einem Gehäuseblock eines Hydroaggregats 10 auszubilden.

### Offenbarung der Erfindung

### Vorteile der Erfindung

Der Erfindung liegt die Aufgabe zugrunde, ein Hydroaggregat vorzuschlagen, das bezüglich seiner Außenabmessungen besonders kompakt baut und dessen Gehäuseblock aufgrund von verringertem mechanischem Bearbeitungsaufwand kostengünstiger herstellbar ist. Ein erfindungsgemäßes Hydroaggregat löst diese Aufgabe anhand der Merkmale des Anspruchs 1.

Aufgrund seiner geringeren Abmessungen weist ein erfindungsgemäßes Hydroaggregat ein geringeres Gewicht auf. Ferner ermöglicht das vorgeschlagene Hydroaggregat Bremsdruckregelungen mit hoher Dynamik, weil die hydraulischen Leitungsverbindungen besonders kurz ausgebildet sind und wenig Umlenkungen aufweisen.

Weitere Vorteile oder vorteilhafte Weiterbildungen der Erfindung ergeben sich aus den Unteransprüchen und der nachfolgenden Beschreibung.

### Zeichnung

Ein Ausführungsbeispiel der Erfindung ist in der Zeichnung dargestellt und in der nachfolgenden Beschreibung im Detail beschrieben.

Wie erwähnt, zeigt Figur 1 den aus dem Stand der Technik hinlänglich bekannten Hydraulikschaltplan einer Fahrzeugbremsanlage mit Fahrstabilitätsregelung; die
Figur 2 zeigt anhand einer perspektivischen Ansicht, die Anordnung der zur Ausbildung dieses Hydraulikschaltplans notwendigen Ausnehmungen bei einem ebenfalls aus dem Stand der Technik vorbekannten Gehäuseblock eines Hydroaggregats und
Figur 3 zeigt vergleichsweise dazu, einen Gehäuseblock mit einer erfindungsgemäßen Anordnung der notwendigen Ausnehmungen.

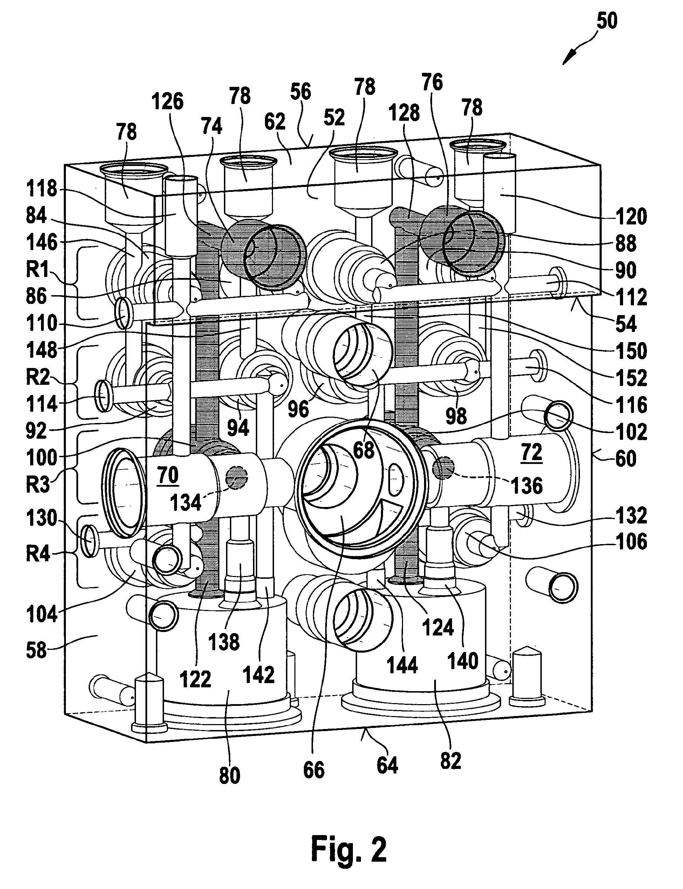

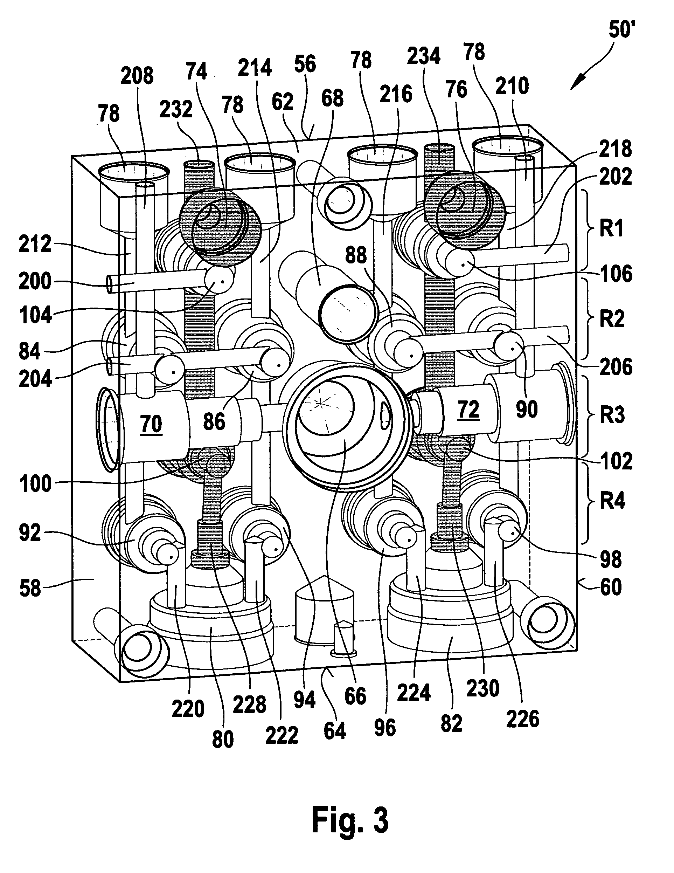

Bei den Figuren 2 und 3 handelt sich um Inversdarstellungen, d. h. Darstellungen, welche die am Gehäuseblock vorgenommenen Ausnehmungen hervorheben anstelle der Umrisse des Gehäuseblocks. Beiden Darstellungen liegt der selbe Maßstab zugrunde, so dass die unterschiedlichen Größenverhältnisse der sich ergebenden Gehäuseblöcke erkennbar sind.

### Beschreibung des Ausführungsbeispiels

Figur 2 zeigt einen Gehäuseblock 50 eines aus dem Stand der Technik bekannten Hydroaggregats 10 (Figur 1). Dieser Gehäuseblock 50 wird gebildet durch eine massive Metallplatte, die durch spannende Nachbearbeitung mit einer Vielzahl von Ausnehmungen versehen ist. Eine Vorderseite 52 des Gehäuseblocks 50 ist über ihre gesamte Breite einmal rechwinklig abgestuft. Ein sich dadurch ergebende Stufe 54 teilt den Gehäuseblock 50 in einen in Figur 2 oben liegenden dickeren Teil und einen demgegenüber zurückversetzten, unten angeordneten, dünneren Teil. Eine der Vorderseite 52 gegenüberliegende Rückseite 56, eine linke und eine rechte Seitenflanke 58, 60, sowie eine Ober- und eine Unterseite 62,64 des Gehäuseblocks 50 sind durch planparallele Flächen gebildet.

Im unteren Teil des Gehäuseblocks 50 ist eine erste Ausnehmung 66 vorhanden, die zur Aufnahme eines nichts gezeigten Antriebselements vorgesehen ist. Diese erste Ausnehmung 66 ist in ihrem Durchmesser von außen nach innen mehrfach abgesetzt und ende sachlochartig im Inneren des Gehäuseblocks 50. Zur Betätigung des Antriebelements kann von außen ein ebenfalls nicht dargestellter Elektromotor am unteren Teil der Vorderseite 52 befestigt werden. Eine Versorgung dieses Elektromotors erfolgt über Kontaktelemente, die durch eine Durchgangsbohrung 68 oberhalb der Ausnehmung 66 für das Antriebselement zur Rückseite 56 des Gehäuseblocks 50 hindurchführbar sind. Diese Rückseite 56 dient der Befestigung eines elektronischen Steuergeräts (nicht dargestellt), an welches die Kontaktelemente anschließbar sind, so dass der Elektromotor bedarfsweise ansteuerbar ist.

Vom Antriebselement werden zwei Pumpenelemente zu einer hin- und hergehenden Hubbewegung angetrieben. Diese Pumpenelemente sind am Gehäuseblock 50 in Pumpenaufnahmen 70, 72 angeordnet. Letztere werden von Stufenbohrungen gebildet, die von den beiden Seitenflanken 58, 60 des Gehäuseblocks 50 ausgehen und in die Ausnehmung 66 für das Antriebselement einmünden. Diese Pumpenbohrungen 70,72 verlaufen koaxial zueinander in horizontaler Richtung.

Im oberen Teil des Gehäuseblocks 50 münden zur Vorderseite 52 hin zwei Ausnehmungen aus. Diese bilden die hydraulischen Anschlüsse 74, 76 des Hydroaggregats für die beiden Bremskreise eines externen Hauptbremszylinders (Figur 1) zur unabhängigen Beaufschlagung zweier Bremskreise. Weitere hydraulische Anschlüsse 78 befinden sich an der Oberseite 62 des Gehäuseblocks 50. Diese Anschlüsse 78 sind zur hydraulischen Kontaktierung der Radbremsen (Figur 1; 16-22) eines Fahrzeugs vorgesehen.

Gegenüberliegend zu den Anschlüssen 78 der Radbremsen sind an der Unterseite 64 des Gehäuseblocks 50 zwei Ausnehmungen 80, 82 für Niederdruckspeicher vorhanden. Jeder der Niederdruckspeicher ist einem der Bremskreise (Figur 1; 12, 14) zugeordnet. Als Niederdruckspeichern werden üblicherweise bekannte federbeaufschlagte Kolbenspeicher eingesetzt.

Eine Vielzahl gleichartiger Ventilaufnahmen 84-106 gehen von der Rückseite 56 des Gehäuseblocks 50 aus und enden allesamt sacklochartig im Inneren des Gehäuseblocks 50. Diese Ventilaufnahmen 84-106 sind zur Aufnahme des Ventilteils verschiedenartiger Magnetventile (nicht gezeigt) vorgesehen. Spulen dieser Magnetventile sind im elektronischen Steuergerät aufgenommen und umschließen nach dessen Anbau an der Rückseite 56 des Gehäuseblocks 50 die über diese Rückseite 56 vorstehenden Abschnitte der Ventilteile.

Die Ventilaufnahmen 84-106 sind in Reihen angeordnet. Es sind insgesamt vier horizontal verlaufende Reihen R1-R4 von Ventilaufnahmen vorhanden, wobei die Reihen zueinander parallel ausgerichtet sind und in verschiedenen Höhen des Gehäuseblocks 50 verlaufen.

Die der Oberseite 62 des Gehäuseblocks 50 zugewandte erste Reihe R1 umfasst vier Ventilaufnahmen 84-90, die zur Aufnahme der Einlassventile vorgesehen sind. Unterhalb dieser ersten Reihe R1 liegen die vier Ventilaufnahmen 92-98 für die Auslassventile in einer zweiten Reihe R2. Ein- und Auslassventile sind jeweils paarweise einer der Radbremsen zugeordnet. Sie dienen, wie bekannt zur Druckregelung.

Eine dritte Reihe R3 von Ventilaufnahmen ist in Figur 2 teilweise durch die Pumpenaufnahmen 70, 72 verdeckt. Sie umfasst lediglich zwei Ventilaufnahmen 100, 102, die zur Anordnung der Hochdruckschaltventile der Fahrzeugbremsanlage bestimmt sind. Jeder Bremskreis ist mit einem solchen Hochdruckschaltventil bestückt. Hochdruckschaltventile steuern eine hydraulische Verbindung vom Hauptbremszylinder (Figur 1; 10) zur Saugseite der Pumpenelemente in den Pumpenaufnahmen 70, 72.

Eine der Unterseite 64 des Gehäuseblocks 50 zugewandte vierte Reihe R4 umfasst ebenfalls zwei Ventilaufnahmen 104, 106 und zwar für die sogenannten Umschaltventile der Fahrzeugbremsanlage. Auch diese sind pro Bremskreis nur einmal vorhanden. Diese beiden Ventilaufnahmen liegen näher zu den Seitenflanken 58, 60 des Gehäuseblocks 50 als die Ventilaufnahmen 100, 102 der Hochdruckschaltventile der dritten Reihe R3, welche näher zum Zentrum des Gehäuseblocks 50 platziert sind. Umschaltventile sperren bei Bedarf eine bestehende Druckmittelverbindung von den Radbremsen zum Hauptbremszylinder.

Die beschriebenen Ausnehmungen 70-106 mit Ausnahme der Ausnehmungen 66 und 68 für das Antriebselement und für die Kontaktelemente des Elektromotors sind durch Druckmittel führende Kanäle hydraulisch untereinander verbunden. Diese Druckmittelkanäle sind aus fertigungstechnischen Gründen jeweils senkrecht zu einer der Außenseiten des Gehäuseblocks 50 ausgerichtet und treffen damit gegebenenfalls im Inneren des Gehäuseblocks 50 im rechten Winkel aufeinander.

Zwei Einlassventilkanäle 110, 112 gehen von beiden Seitenflanken 58, 60 des Gehäuseblocks 50 aus und verbinden jeweils zwei nebeneinander liegende Ventilaufnahmen 84,86 ; 88,90 für die Einlassventile. Die beiden Einlasskanäle 110, 112 sind als Sacklochbohrungen ausgeführt. Sie verlaufen koaxial zueinander in horizontaler Richtung und werden nach ihrer Herstellung von außen druckmitteldicht verschlossen. In der Regel werden hierzu Kugeln im Bereich der Mündung eingepresst.

Zwei Auslassventilkanäle 114, 116, die ebenfalls an den Seitenflanken 58, 60 des Gehäuseblocks 50 beginnen und als horizontal verlaufende Sacklochbohrungen ausgebildet sind, verlaufen parallel und zur Rückseite 56 des Gehäuseblocks 50 hin versetzt zu den Einlassventilkanälen 110, 112 und verbinden jeweils zwei der Ventilaufnahmen 92,94 ; 96,98 der Auslassventile miteinander. Auch diese Auslassventilkanäle 114, 116 werden nach ihrer Herstellung von außen verschlossen.

Zwei Vertikalkanäle 118, 120 gehen nahe zu den Seitenflanken 58, 60 von der Oberseite 62 des Gehäuseblocks 50 aus. Sie schneiden jeweils einen der Einlassventilkanäle 110, 112, durchdringen jeweils eine der Pumpenaufnahmen 70, 72 und enden in jeweils einer der Ventilaufnahmen 104, 106 der Umschaltventile. Auch diese Vertikalkanäle 118, 120 werden in einem Nachfolgearbeitsgang von außen verschlossen.

Jeweils vom Boden einer Ausnehmung 80, 82 für einen Niederdruckspeicher geht ein erster senkrecht geführter Anschlusskanal 122, 124 aus. Dieser durchdringt die Ventilaufnahme 100, 102 der Hochdruckschaltventile und endet in einem der Stichkanäle 126, 128, die von den Anschlüssen 74, 76 für einen Bremskreis des Hauptbremszylinders ausgehen. Jeder Anschlusskanal 122, 124 ist durch eine zu verschließende Horizontalbohrung 130, 132 mit einer der Ventilaufnahmen 104, 106 der Umschaltventile kontaktiert.

Darüber hinaus bestehen Hydraulikverbindungen 134, 136 von den Ventilaufnahmen 100, 102 der Hochdruckschaltventile zu den Pumpenaufnahmen 70,72. Diese Hydraulikverbindungen sind in Figurg 2 gestrichelt eingezeichnet, da sie von den Pumpenaufnahmen 70, 72 verdeckt werden.

Jeweils ein zweiter, ebenfalls am Boden einer der Ausnehmungen 80, 82 für einen Niederdruckspeicher ausgehender Anschlusskanal 138, 140 stellte eine direkte Druckmittelverbindung zwischen den Ausnehmungen 80, 82 und einer der Pumpenaufnahmen 70, 72 her.

Weitere Anschlusskanäle 142, 144 verbinden die Ausnehmungen 80, 82 eines Niederdruckspeichers direkt mit einer der beiden Ventilaufnahmen 94; 96 der Auslassventile.

Schließlich sind jeweils zwei übereinanderliegende Ventilaufnahmen 84-90; 92-98 für ein Einlassventil und für ein Auslassventil mit jeweils einem Anschluss 78 einer Radbremse hydraulisch kontaktiert. Dazu dienen Koppelkanäle 146-152, die am Boden der Anschlüsse 78 der Radbremsen beginnen und in einer der Ventilaufnahmen 92-98 der Auslassventile enden. Insgesamt sind vier solcher Koppelkanäle 146-152 am Gehäuseblock 50 ausgebildet.

Bei einer Fahrzeugbremsanlage gemäß des Hydraulikschaltplans nach Figur 1 lässt sich jeder Bremskreis in einen sogenannten Ansaugbereich und einen Systembereich untergliedern. Der Ansaugbereich umfasst alle hydraulischen Komponenten und Druckmittelverbindungen die der Saugseite einer zugeordneten Pumpe zuzuordnen sind, während zum Systembereich alle Komponenten und Druckmittelverbindungen zählen, die auf der Druckseite der zugeordneten Pumpe angeordnet sind. In Figur 2 sind die zum Ansaugbereich eines Bremskreises zählenden Ausnehmungen durch eine breiteren Strickstärke hervorgehoben. Zum Ansaugbereich eines Bremskreises zählt jeweils der Anschluss 74, 76 des Hauptbremszylinders, die Ventilaufnahme 100, 102 des Hockdruckschaltventils, sowie die Druckmittelverbindungen 122, 126 und 134.

Beim beschriebenen Stand der Technik führt dieser Ansaugbereich von einem Anschluss 74, 76 des Hauptbremszylinders auf direktem Weg zu einer Ventilaufnahme 100, 102 eines Hochdruckschaltventils und von dort direkt weiter zu einer Pumpenaufnahme 70,72 bzw. zu einer der Ausnehmungen 80, 82 eines Niederdruckspeichers. Die Ventilaufnahmen 104, 106 der Umschaltventile befindet sich abseits dieses Ansaugbereichs. Sie sind mittels separat herzustellender Horizontalbohrungen 130, 132 an den Ansaugbereich angeschlossen und werden darüber mit Druckmittel versorgt.

Aufgrund dieser Anordnung wird jedoch verhindert, dass sich bei geschlossenem Umschaltventil und bei geöffnetem Hochdruckschaltventil im Bereich um die Ventilaufnahmen 104, 106 der Umschaltventile eine Strömung einstellt.

Figur 3 zeigt demgegenüber eine erfindungsgemäß vorteilhafte Anordnung der Ausnehmungen an einem Gehäuseblock 50'. Dieser Gehäuseblock 50' lässt sich nunmehr quaderförmig mit paarweise planparallelen nicht abgestuften Außenseiten ausbilden. Seine Außenabmessungen sind deutlich kleiner als die des in Figur 2 gezeigten Gehäuseblocks 50. Folglich hat der vorgeschlagene Gehäuseblock 50' ein geringeres Gewicht. Zudem benötigt seine Herstellung deutlich weniger Zeitaufwand, da die Herstellung der Ausnehmungen weniger Zerspanungsvorgänge erfordert. Bei der nachfolgenden Beschreibung wurden für diejenigen Ausnehmungen, die denen des Gehäuseblocks 50 nach Figur 2 funktional entsprechen, dieselben Bezugsziffern verwendet.

Die Ausnehmung 66 für das Antriebselement, die Pumpenaufnahmen 70, 72, die Anschlüsse 74, 76 für den Hauptbremszylinder und die Anschlüsse 78 für die Radbremsen sowie die Ausnehmungen 80, 82 für die Niederdruckspeicher befinden sich in derselben Relativposition als beim Stand der Technik nach Figur 2, so dass sich dahingehende Wiederholungen erübrigen. Der wesentliche Unterschied dieses Gehäuseblocks 50' gegenüber dem nach Figur 2 besteht in der Anordnung und in der hydraulischen Kontaktierung der Ventilaufnahmen 84-106 an der Rückseite 56.

Diese Ventilaufnahmen 84-106 sind wiederum in vier zueinander parallelen, horizontal auf unterschiedlicher Höhe am Gehäuseblock 50' verlaufenden Reihen R1-R4 angeordnet. Allerdings umfasst die der Oberseite 62 des Gehäuseblocks 50' zugewandte erste Reihe R1 nunmehr lediglich die beiden Ventilaufnahmen 104, 106 der Umschaltventile einer 2-kreisigen Fahrzeugbremsanlage.

Darunter befindet sich eine zweite Reihe R2 mit insgesamt vier Ventilaufnahmen 84-90. Diese sind auf Lücke zu den Ventilaufnahmen 104, 106 der ersten Reihe R1 angeordnet. Diese Ventilaufnahmen 84-90 nehmen die Einlassventile der Fahrzeugbremsanlage auf.

Eine dritte Reihe R3 aus wiederum nur zwei Ventilaufnahmen 100, 102 ist geringfügig unterhalb der Pumpenaufnahmen 70,72 dieses Gehäuseblocks 50' angeordnet. Diese Ventilaufnahmen 100, 102 sind vorgesehen zur Aufnahme der Hochdruckschaltventile. Sie schneiden mit ihrem inneren Ende die Pumpenaufnahmen 70, 72 an und stellen dadurch eine von den Hochdruckschaltventilen steuerbare Druckmittelverbindung zu den in den Pumpenaufnahmen angeordneten Pumpenelementen her. Die Ventilaufnahmen 100 und 102 liegen auf Lücke zu den Ventilaufnahmen 84-90 der zweiten Reihe R2 und befinden sich senkrecht unterhalb der Ventilaufnahmen 104, 106 der ersten Reihe R1.

Der Unterseite 64 des Gehäuseblocks 50' zugewandt befindet sich die vierte Reihe R4 aus wiederum vier Ventilaufnahmen 92-98, welche die Auslassventile der Fahrzeugbremsanlage aufnehmen. Die Ventilaufnahmen 92-98 der vierten Reihe R4 und die der zweiten Reihe R2 liegen senkrecht untereinander.

Die Leitungsverbindungen zur hydraulischen Kopplung der Aufnahmen für die Hydraulikkomponenten erfolgt auch bei diesem Ausführungsbeispiels durch senkrecht zu einer der Außenseiten des Gehäuseblocks 50' verlaufende Bohrungen, so dass diese sich gegebenenfalls im rechten Winkel im Inneren des Gehäuseblocks 50' schneiden.

Zwei erste zueinander koaxiale, horizontal verlaufende Stichkanäle 200, 202 gehen von beiden Seitenflanken 58, 60 des Gehäuseblocks 50' aus und enden in den beiden Ventilaufnahmen 104, 106 der Umschaltventile. Mit Abstand darunter angeordnet verlaufen zwei parallel verlaufende Einlassventilbohrungen 204, 206. Diese gehen ebenfalls von den beiden Seitenflanken 58, 60 des Gehäuseblocks 50' aus und verbinden jeweils die beiden Ventilaufnahmen 84,86 ; 88,90 der Einlassventile eines Bremskreises miteinander. Die Einlassventilbohrungen 204, 206 sind als Sacklochbohrungen ausgeführt und enden in der jeweils innen liegenden Ventilaufnahme 86; 88. Sowohl die beiden Stichkanäle 200, 202 als auch die beiden Einlassventilbohrungen 204, 206 werden nach ihrer Herstellung von außen verschlossen.

Zur Herstellung einer hydraulischen Verbindung der Stichkanäle 200, 202 mit den Einlassventilbohrungen 204, 206 sind Vertikalkanäle 208, 210 vorgesehen. Diese liegen nahe den Seitenflanken 58, 60 des Gehäuseblocks 50' und nehmen ihren Anfang an der Oberseite 62 des Gehäuseblocks 50'. Sie münden in jeweils einer der Pumpenaufnahmen 70, 72 ein. Auf ihrem Weg dorthin schneiden die Vertikalkanäle 208, 210 sowohl einen der Stichkanäle 200, 202 und einen der Einlassventilkanäle 204, 206 an. Auch die Vertikalkanäle 208, 210 werden nach ihrer Herstellung von außen verschlossen.

Ebenfalls in vertikaler Richtung, jedoch bezüglich der beschriebenen Vertikalkanäle 208, 210 in einer zur Rückseite 56 des Gehäuseblocks 50' hin versetzten Ebene verlaufen insgesamt vier Sacklochbohrungen 212-218. Diese beginnen jeweils am Grund der Anschlüsse 78 der Radbremsen, durchstoßen die Ventilaufnahmen 84-90 der Einlassventile und enden in den Ventilaufnahmen 92-98 der Auslassventile.

Die Ventilaufnahmen 92-98 der Auslassventile der Radbremsen sind über kurze vertikal geführte Stichkanäle 220-226 mit einer der Ausnehmungen 80, 82 für einen Niederdruckspeicher an der Unterseite 64 des Gehäuseblocks 50' gekoppelt. Neben den Stichkanälen 220-226 führt jeweils ein dritter vertikaler Verbindungskanal 228, 230 vom Boden der Ausnehmung 80, 82 eines Niederdruckspeichers auf geradem und senkrechtem Weg zur Ventilaufnahme 100, 102 eines der Hochdruckschaltventile.

Zwei von der Oberseite 62 her in den Gehäuseblock 50' eingebrachte und nach ihrer Herstellung nach außen zu verschließende Vertikalbohrungen 232, 234 schneiden einen der Anschlüsse 74, 76 des Hauptbremszylinders an, durchstoßen jeweils eine der Ventilaufnahmen 104, 106 der Umschaltventile und enden in einer der Ventilaufnahmen 100, 102 der Hochdruckschaltventile. Die Vertikalbohrungen 232, 234 bewirken zudem jeweils eine Verbindung mit den Pumpenaufnahmen 70, 72.

Betrachtet man bei diesem Ausführungsbeispiel die Ansaugbereiche beider Pumpen (gekennzeichnet durch verbreitere Strichstärke der betroffenen Ausnehmungen), so ist zu erkennen, dass die Druckmittelverbindungen von einem der Anschlüsse 74, 76 des Hauptbremszylinders zu einer der Ventilaufnahmen 100, 102 der Hochdruckschaltventile durch eine der Ventilaufnahmen 104, 106 der Umschaltventile hindurchgeführt ist. Dies wirkt sich derart aus, dass bei geschlossenem Umschaltventil und bei geöffnetem Hochdruckschaltventil stattfindende Strömungen von Bremsfluid auch Strömungen in den Bereichen der Ventilaufnahmen 104, 106 der Umschaltventile bewirken. Dieser prinzipielle Unterschied zum Gegenstand nach Figur 2 ermöglicht einen Gehäuseblock 50' kompakterer Außenmessungen, geringeren Gewichts und einfacherer spanabhebender Bearbeitung.

Selbstverständlich sind Änderungen oder Ergänzungen am beschriebenen Ausführungsbeispiel möglich ohne vom in den beigefügten Ansprüchen festgelegten Grundgedanken der Erfindung abzuweichen.

## Patentansprüche

1. Hydroaggregat zur Regelung des Bremsdrucks in einer Fahrzeugsbremsanlage, mit einem Gehäuseblock (50, 50'), mit am Gehäuseblock (50. 50') ausgebildeten Ventilaufnahmen (84-106), zur Aufnahme elektronisch ansteuerbarer Magnetventile, mit in Pumpenaufnahmen (70,72) angeordneten und von einem Antrieb betätigbaren Pumpenelementen, wobei die Pumpenaufnahmen (70, 72) quer zu den Ventilaufnahmen (84-106) am Gehäuseblock (50. 50') ausgerichtet sind, mit am Gehäuseblock (50, 50') ausgebildeten Anschlüssen (74-78) für einen Hauptbremszylinder (10) und für wenigstens eine Radbremse (16-22) und mit Bremsfluid führenden Druckmittelverbindungen, welche die Ventilaufnahmen (84-106), die Pumpenaufnahmen (70,72) und die Hydraulikanschlüsse (74-78) hydraulisch miteinander kontaktieren, wobei in einer ersten Ventilaufnahme (104, 106) ein erstes Magnetventil angeordnet ist, mit dem eine erste Druckmittelverbindung vom Anschluss (78) einer Radbremse zu einem der Anschlüsse (74,76) des Hauptbremszylinders sperrbar ist und wobei in einer zweiten Ventilaufnahme (100, 102) ein zweites Magnetventil angeordnet ist, das eine zweite Druckmittelverbindung von einem der Anschlüsse (74,76) des Hauptbremszylinders zu einer Saugseite eines der Pumpenelemente steuert, wobei die zweite Druckmittelverbindung eine Bohrung (232, 234) aufweist, die durch die erste Ventilaufnahme (104, 106) des ersten Magnetventils hindurchgeführt ist, die eine Verbindung mit einem der Anschlüsse (74, 76) für den Hauptbremszylinder (10) bewirkt und die in der zweiten Ventilaufnahme (100, 102) für das zweite Magnetventil endet, **dadurch gekennzeichnet, dass** zu beiden Seiten der Pumpenaufnahmen (70,72) jeweils eine Reihe von Ventilaufnahmen (84-90) für die Einlassventile und eine Reihe von Ventilaufnahmen (92-98) für die Auslassventile angeordnet ist, die erste und zweite Ventilaufnahme (104,106;100,102) beidseitig der Rumpenaufnahnen (70,72) angeordnet sind und die Bohrung (232, 234) der zweiten Druckmittelverbindung eine Verbindung mit einer der Pumpenaufnahmen (70,72) bewirkt.

2. Hydroaggregat nach Anspruch 1, **gekennzeichnet, durch** eine dritte Druckmittelverbindung der Ventilaufnahmen (84, 86) der Einlassventile eines Bremskreises mit der Ventilaufnahme (104, 106) eines zugeordneten ersten Magnetventils und mit einer Pumpenaufnahme (70, 72), die aus mehreren von außen verschlossenen und sacklochartig im Inneren des Gehäuseblocks (50') endenden Einzelbohrungen (200, 204, 208 ; 202, 206, 210) gebildet ist.

3. Hydroaggregat nach Anspruch 2, **dadurch gekennzeichnet, dass** die dritte Druckmittelverbindung durch insgesamt drei Einzelbohrungen (200, 204, 208 ; 202, 206, 210) gebildet ist, wobei zwei der drei Einzelbohrungen 200,204 ; 202,206) parallel zueinander verlaufen und durch eine dritte quer dazu verlaufende und in eine der Pumpenaufnahmen (70,72) einmündende Einzelbohrung (208 ; 210) miteinander verbunden sind.

4. Hydroaggregat nach Anspruch 2, wobei die Ventilaufnahmen (84-106) am Gehäuseblock (50') in mehreren zueinander parallelen und auf unterschiedlichen Höhen angeordneten Reihen (R1-R4) angeordnet sind, **dadurch gekennzeichnet, dass** in einer ersten, den hydraulischen Anschlüssen (74,76,78) des Gehäuseblocks (50') zugewandten Reihe (R1) die Ventilaufnahmen (104, 106) der ersten Magnetventile angeordnet sind, durch welche die erste Druckmittelverbindung vom Anschluss (78) einer Radbremse zu einem der Anschlüsse (74, 76) des Hauptbremszylinders sperrbar sind.

5. Hydroaggregat nach Anspruch 3, **dadurch gekennzeichnet, dass** demjenigen Ende des Gehäuseblocks (50') zugewandt, das dem die hydraulischen Anschlüsse (74-78) aufweisenden Ende des Gehäuseblocks (50') gegenüberliegt, die Ventilaufnahmen (92-98) derjenigen Magnetventile angeordnet sind, welche eine vierte Druckmittelverbindung von einem der Anschlüsse (78) einer Radbremse zu einer der Pumpenaufnahmen (70, 72) steuern.

6. Hydroaggregat nach einem der Ansprüche 1 bis 5, **dadurch gekennzeichnet, dass** der Gehäuseblock (50') quaderförmig mit durchgehend ebenen jeweils paarweise planparallelen Außenflächen ausgebildet ist.

## Claims

1. Hydraulic unit for regulating the brake pressure in a vehicle brake system, with a housing block (50, 50'), with valve receptacles (84-106), formed on the housing block (50, 50'), for the reception of electronically activatable solenoid valves, with pump elements arranged in pump receptacles (70, 72) and actuable by a drive, the pump receptacles (70, 72) being oriented transversely to the valve receptacles (84-106) on the housing block (50, 50'), with connections (74-78), formed on the housing block (50, 50'), for a brake master cylinder (10) and for at least one wheel brake (16-22), and with pressure-medium connections which carry brake fluid and which contact the valve receptacles (84-106), pump receptacles (70, 72) and hydraulic connections (74-78) hydraulically with one another, a first valve receptacle (104, 106) having arranged in it a first solenoid valve, by means of which a first pressure-medium connection from the connection (78) of one wheel brake to one of the connections (74, 76) of the brake master cylinder can be shut off, and a second valve receptacle (100, 102) having arranged in it a second solenoid valve which controls a second pressure-medium connection from one of the connections (74, 76) of the brake master cylinder to a suction side of one of the pump elements, the second pressure-medium connection having a bore (232, 234) which is led through the first valve receptacle (104, 106) of the first solenoid valve and makes a connection with one of the connections (74, 76) for the brake master cylinder (10) and which terminates in the second valve receptacle (100, 102) for the second solenoid valve, **characterized in that** a series of valve receptacles (84-90) for the inlet valves and a series of valve receptacles (92-98) for the outlet valves are arranged in each case on both sides of the pump receptacles (70, 72), the first and the second valve receptacles (104, 106; 100, 102) are arranged on both sides of the pump receptacles (70, 72), and the bore (232, 234) of the second pressure-medium connection makes a connection with one of the pump receptacles (70, 72).

2. Hydraulic unit according to Claim 1, **characterized by** a third pressure-medium connection of the valve receptacles (84, 86) of the inlet valves of one brake circuit to the valve receptacle (104, 106) of an assigned first solenoid valve and to a pump receptacle (70, 72) which is formed from a plurality of individual bores (200, 204, 208; 202, 206, 210) closed from outside and terminating in the manner of a blind hole inside the housing block (50').

3. Hydraulic unit according to Claim 2, **characterized in that** the third pressure-medium connection is formed by a total of three individual bores (200, 204; 208; 202, 206, 210), two of the three individual bores (200, 204; 202, 206) running parallel to one another and being connected to one another by means of a third individual bore (208; 210) running transversely thereto and issuing into one of the pump receptacles (70, 72).

4. Hydraulic unit according to Claim 2, the valve receptacles (84-106) being arranged on the housing block (50') in a plurality of rows (R1-R4) parallel to one another and arranged at different heights, **characterized in that** the valve receptacles (104, 106) of the first solenoid valves, by means of which the first pressure-medium connection from the connection (78) of a wheel brake to one of the connections (74, 76) of the brake master cylinder, can be shut off, are arranged in a first row (R1) facing the hydraulic connections (74, 76, 78) of the housing block (50').

5. Hydraulic unit according to Claim 3, **characterized in that** the valve receptacles (92-98) of those solenoid valves which control a fourth pressure-medium connection from one of the connections (78) of a wheel brake to one of the pump receptacles (70, 72) are arranged so as to face that end of the housing block (50') which lies opposite that end of the housing block (50') which has the hydraulic connections (74-78).

6. Hydraulic unit according to one of Claims 1 to 5, **characterized in that** the housing block (50') is of parallelepipedal design with continuously planar outer faces in each case plane-parallel in pairs.

## Revendications

1. Unité hydraulique pour réguler la pression de freinage dans une installation de frein de véhicule, avec un bloc boîtier (50, 50'), avec des logements de soupape (84-106) réalisés sur le bloc-boîtier (50, 50'), pour recevoir des électrovannes à commande électronique, avec des éléments de pompe disposés dans des logements de pompe (70, 72) et pouvant être actionnés par un entraînement, les logements de pompe (70, 72) étant orientés transversalement aux logements de soupape (84-106) sur le bloc-boîtier (50, 50'), avec des raccords (74-78) réalisés sur le bloc-boîtier (50, 50') pour un cylindre de frein principal (10) et pour au moins un frein de roue (16-22) et avec des connexions de fluide sous pression conduisant du fluide de frein, qui mettent en contact hydrauliquement les uns avec les autres les logements de soupape (84-106), les logements de pompe (70, 72) et les raccords hydrauliques (74-78), une première électrovanne étant disposée dans un premier logement de soupape (104, 106) et permettant de bloquer une première connexion de fluide sous pression entre le raccord (78) d'un frein de roue et l'un des raccords (74, 76) du cylindre de frein principal, et une deuxième électrovanne étant disposée dans un deuxième logement de soupape (100, 102), laquelle commande une deuxième connexion de fluide sous pression entre l'un des raccords (74, 76) du cylindre de frein principal et un côté aspiration de l'un des éléments de pompe, la deuxième connexion de fluide sous pression présentant un alésage (232, 234) qui est guidé à travers le premier logement de soupape (104, 106) de la première électrovanne, qui réalise une connexion avec l'un des raccords (74, 76) pour le cylindre de frein principal (10) et qui se termine dans le deuxième logement de soupape (100, 102) pour la deuxième électrovanne, **caractérisée en ce que** des deux côtés des logements de pompe (70, 72) est à chaque fois disposée une rangée de logements de soupape (84-90) pour les soupapes d'admission et une rangée de logements de soupape (92-98) pour les soupapes d'échappement, le premier et le deuxième logement de soupape (104, 106 ; 100, 102) étant disposés de chaque côté des logements de pompe (70, 72), et l'alésage (232, 234) de la deuxième connexion de fluide sous pression réalisant une connexion à l'un des logements de pompe (70, 72).

2. Unité hydraulique selon la revendication 1, **caractérisée par** une troisième connexion de fluide sous pression des logements de soupape (84, 86) des soupapes d'admission d'un circuit de freinage au logement de soupape (104, 106) d'une première électrovanne associée, et avec un logement de pompe (70, 72), qui est formé de plusieurs alésages individuels (200, 204, 208 ; 202, 206, 210) fermés de l'extérieur et se terminant à la manière de trous borgnes à l'intérieur du bloc boîtier (50').

3. Unité hydraulique selon la revendication 2, **caractérisée en ce que** la troisième connexion de fluide sous pression est formée par un total de trois alésages individuels (200, 204, 208 ; 202, 206, 210), deux des alésages individuels (200, 204 ; 202, 206) s'étendant parallèlement l'un à l'autre et étant connectés l'un à l'autre par un troisième alésage individuel (208 ; 210) s'étendant transversalement à ceux-ci et débouchant dans l'un des logements de pompe (70, 72).

4. Unité hydraulique selon la revendication 2, dans laquelle les logements de soupape (84-106) sont disposés sur le bloc boîtier (50') dans plusieurs rangées (R1-R4) parallèles les unes aux autres et disposées à des hauteurs différentes, **caractérisée en ce que** dans une première rangée (R1) tournée vers les raccords hydrauliques (74, 76, 78) du bloc boîtier (50'), sont disposés les logements de soupape (104, 106) des premières électrovannes, lesquels permettent de bloquer la première connexion de fluide sous pression du raccord (78) d'un frein de roue à l'un des raccords (74, 76) du cylindre de frein principal.

5. Unité hydraulique selon la revendication 3, **caractérisée en ce que** les logements de soupape (92-98) des électrovannes qui commandent une quatrième connexion de fluide sous pression de l'un des raccords (78) d'un frein de roue à l'un des logements de pompe (70, 72) sont tournés vers l'extrémité du bloc boîtier (50') qui est opposée à l'extrémité du bloc boîtier (50') présentant les raccords hydrauliques (74-78).

6. Unité hydraulique selon l'une quelconque des revendications 1 à 5, **caractérisée en ce que** le bloc boîtier (50') est réalisé sous forme parallélépipédique avec des surfaces extérieures planes et à chaque fois à plans parallèles par paires.
